# EUROPEAN PATENT SPECIFICATION

(11) **EP 4 384 901 B1**
(45) Date of publication and mention of the grant of the patent: **13.05.2026**
(21) Application number: 22817468.6
(22) Date of filing: 01.11.2022
(51) Int. Cl.: G06F 8/61

(54) **FILTERING THIRD-PARTY CONTENT RELATED TO APPLICATIONS BASED ON INSTALLATION STATUS**
FILTERUNG VON INHALTEN DRITTER IM ZUSAMMENHANG MIT ANWENDUNGEN AUF DER BASIS DES INSTALLATIONSSTATUS
FILTRAGE DE CONTENU TIERS ASSOCIÉ À DES APPLICATIONS SUR LA BASE D'UN ÉTAT D'INSTALLATION

(43) Date of publication of application: 19.06.2024
(73) Proprietor: Google LLC, Mountain View, CA 94043 (US)
(72) Inventor: YIM, Keun Son, Mountain View, CA 94043 (US)
(74) Representative: Marks & Clerk GST
(86) International application number: PCT/US2022/048511
(87) International publication number: WO 2024/096871

(56) References cited:
- KR-A- 20150 071 760
- US-A- 6 073 214
- US-A1- 2014 344 254
- US-B2- 9 280 334

## Description

### FIELD OF THE DISCLOSURE

The present disclosure generally relates to mobile computing device applications and, more particularly, to techniques for filtering third-party content related to the installation of mobile applications that is to be provided via a given mobile computing device based on which applications are already installed on that mobile computing device.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Certain third-party content for mobile computing devices includes links to applications installable on a mobile computing device. Generally speaking, this third-party content is distributed to user devices by a remote server, which has no way of determining which mobile applications are installed on the various user devices to which it distributes third-party content. For this reason, the remote server may, in some cases, distribute third-party content related to mobile computing device applications that are already installed on a given user's mobile computing device and send them to that user's mobile computing device.

However, if a user already has an application installed on his or her mobile computing device, the user is unlikely to select a link to that app. That is, regardless of whether a mobile computing device user is interested in a given mobile computing device app, the user will be unlikely to click on third-party content link for that application if he or she already has the application installed on his or her mobile computing device.

In US 2014/344254 A1, a software recommending method and a software recommending system are disclosed. The method comprises detecting software already installed and/or web application already run on a client, analyzing software already installed and/or web application already run on the client, and obtaining personalization data of the client user.

In US 9 280 334 B2, a method for controlling execution of a script program programmed to install a computer program is disclosed. An installation computer begins execution of the script program, and before a line or stanza of the script program is executed to initiate installation of the computer program, the installation computer determines that the line or stanza is programmed to initiate installation of the computer program.

KR 2015 0071760 A, a system and a method are disclosed for distributing/executing an application using content exposure. The system comprises: an engine/content distributing server which provides a terminal engine which is executed in the background mode and distributes content executable by the terminal engine; an affiliate application generating server which is provided with the terminal engine from an engine/content providing server and generates and registers an affiliate application including the terminal engine; an application market server which receives registration of an affiliate application from the affiliate application generating server and distributes the affiliate application; and a user terminal which downloads content being distributed from the engine/content distributing server.

In US 2008/189419 A1, a system and method to synchronize OSGi bundle inventories between an OSGi bundle server and a client are presented. When a server detects that a client requires a bundle update, the server and client proceed through a data synchronization process prior to invoking in a device management session to provide bundles from the server to the client.

### SUMMARY

In an embodiment, a computer-implemented method for filtering third-party content related to the installation of mobile applications that is to be provided via a given mobile computing device based on which applications are already installed on that mobile computing device, as may be implemented by a server, is provided, as set forth in the appended claims.

In another embodiment, a system for filtering third-party content related to the installation of mobile applications that is to be provided via a given mobile computing device based on which applications are already installed on that mobile computing device, as may be implemented by a server, is provided, as set forth in the appended claims.

In still another embodiment, a non-transitory computer-readable medium storing instructions for filtering third-party content related to the installation of mobile applications that is to be provided via a given mobile computing device based on which applications are already installed on that mobile computing device, as may be implemented by a server, is provided, as set forth in the appended claims.

In an embodiment, a computer-implemented method for filtering third-party content related to the installation of mobile applications that is to be provided via a given mobile computing device based on which applications are already installed on that mobile computing device, as may be implemented by a mobile computing device is provided, as set forth in the appended claims.

In another embodiment, a system for filtering third-party content related to the installation of mobile applications that is to be provided via a given mobile computing device based on which applications are already installed on that mobile computing device, as may be implemented by a mobile computing device, is provided, as set forth in the appended claims.

In still another embodiment, a non-transitory computer-readable medium storing instructions for filtering third-party content related to the installation of mobile applications that is to be provided via a given mobile computing device based on which applications are already installed on that mobile computing device, as may be implemented by a mobile computing device, is provided, as set forth in the appended claims.

Refraining from sending third-party content may allow the reservation of bandwidth or data on mobile devices for other services. For example, refraining from sending third-party content may preserve bandwidth availability to a mobile device for other third party content or for other mobile device services. In addition, by refraining from sending certain third-party content which would otherwise not be presented on a mobile device, bandwidth of the connection to the mobile device and storage on the mobile device may be preserved. Refraining from presenting third-party content by the mobile computing device may allow for the preservation of mobile device processing power to carry out other processes.

### BRIEF DESCRIPTION OF THE DRAWINGS

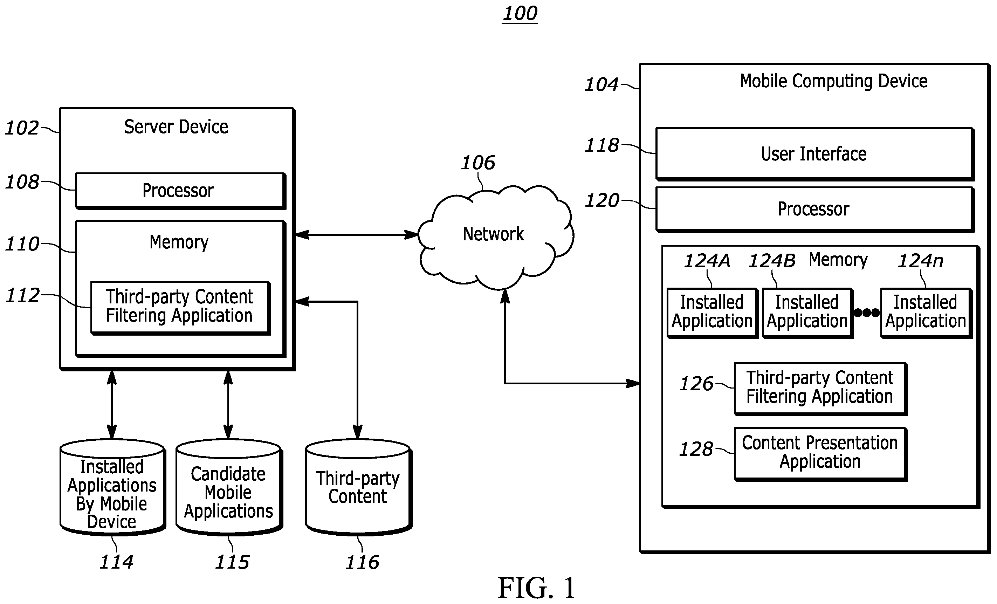

FIG. 1 illustrates a block diagram of an example system that implements techniques of this disclosure for filtering third-party content related to the installation of mobile applications that is to be provided via a given mobile computing device based on which applications are already installed on that mobile computing device;

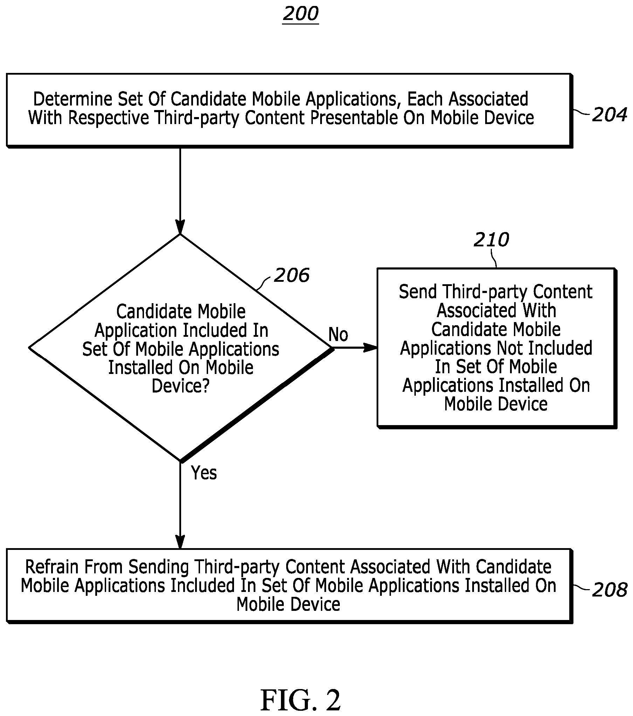

FIG. 2 illustrates a flow diagram of an example method for filtering third-party content related to the installation of mobile applications that is to be provided via a given mobile computing device based on which applications are already installed on that mobile computing device, implemented via a server device; and

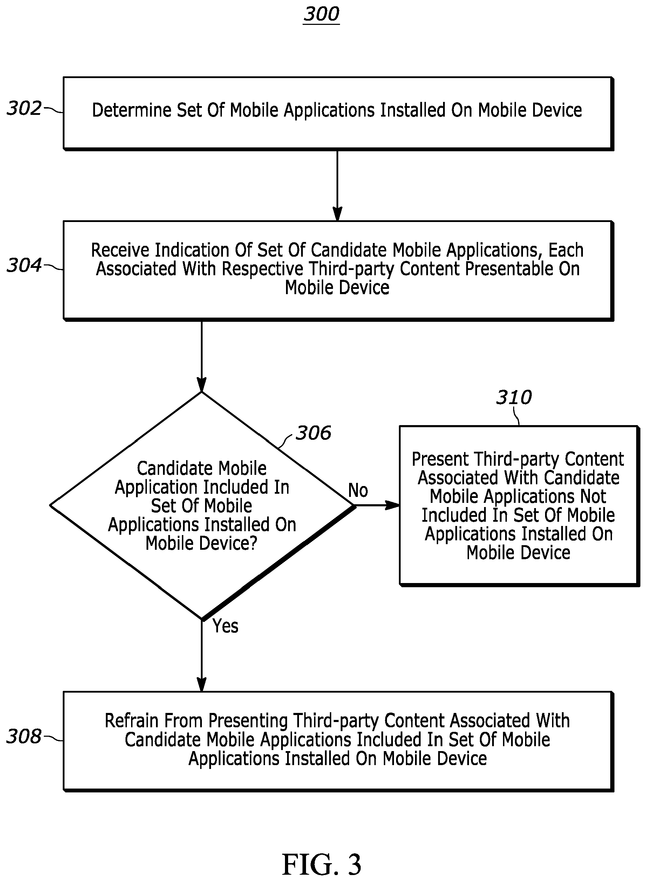

FIG. 3 illustrates a flow diagram of an example method for filtering third-party content related to the installation of mobile applications that is to be provided via a given mobile computing device based on which applications are already installed on that mobile computing device, implemented via a mobile computing device.

### DETAILED DESCRIPTION

### Overview

The present disclosure relates to techniques for filtering third-party content related to the installation of mobile applications that is to be provided via a given mobile computing device based on which applications are already installed on that mobile computing device.

In one example, the mobile computing device (e.g., via a privileged system application such as Google Mobile Services (GMS) Core) monitors the application installation and uninstallation events that occur on the mobile computing device and periodically updates the remote server with an indication of which applications are currently installed on the mobile computing device. Accordingly, the server does not need to keep track of conversions, *i.e.,* instead of trying to record previous instances of presenting third-party content and a conversion that lead to the installation of an app, the server can simply receive updates from the client.

This is done only with the permission of the user of the mobile computing device. The remote server stores the application installation information (*e.g.,* key: device ID and user ID, value: a list of installed applications and package names associated therewith), which may be hashed in some cases to preserve user privacy. The third-party content items distributed by the remote server may include associated information that describes the package name of the application that will be installed based on the user selecting a link within the third-party content item (*e.g.,* the landing page when the link within the third-party content item is clicked by users). When sending third-party content items to a mobile computing device, the remote server can filter out any third-party content items associated with package names matching the package names associated with the device ID and/or user ID of the mobile computing device and/or the user of the mobile computing device.

In another example, the mobile computing device monitors the application installation and uninstallation events that occur on the mobile computing device, but does not provide an indication of which applications are currently installed on the mobile computing device to the remote server. Instead, the remote server distributes multiple possible third-party content items to the mobile computing device, including associated information for each third-party content item that describes the package name of the application that will be installed based on the user selecting a link within the third-party content item. The mobile computing device can then filter out any third-party content items associated with package names matching applications already installed on the mobile computing device, or request additional third-party content items from the remote server if all of the third-party content items sent to the mobile computing device are for applications that are already installed on the mobile computing device.

Additionally, in some examples, a combination of these two methods may be used, in which the mobile computing device filters out third-party content items only for recently installed mobile computing device applications that were not included in the most recent update sent to the remote server.

### Example System

FIG. 1 is a block diagram of a system 100 for filtering third-party content related to the installation of mobile applications that is to be provided via a given mobile computing device based on which applications are already installed on that mobile computing device, in accordance with some examples provided herein. The high-level architecture illustrated in FIG. 1 may include both hardware and software applications, as well as various data communications channels for communicating data between the various hardware and software components, as is described below.

The system 100 may include a sever device 102 and a mobile computing device 104 (such as, *e.g.,* a smart phone, tablet, smart watch, laptop computer, other personal computer, etc.), configured to communicate with one another, *e.g.,* via a network 106, which may include a wired or wireless network.

The server device 102 may include one or more processors 108, and a memory 110 (*e.g.,* volatile memory, non-volatile memory). The memory 110 may be accessible by the one or more processors 108 (*e.g.,* via a memory controller). The one or more processors 108 may interact with the memory 110 to obtain, for example, computer-readable instructions stored in the memory 110. The computer-readable instructions stored in the memory 110 may cause the one or more processors 108 to execute one or more applications, including, in some examples, a third-party content filtering application 112. Furthermore, in some examples, the computer-readable instructions stored on the memory 110 may include instructions for carrying out any of the steps of the method 200, described in greater detail below with respect to FIG. 2.

Generally speaking, executing the third-party content filtering application 112 may include sending third-party content to the mobile computing device 104, *i.e.,* for presentation via the mobile computing device 104.

In some examples, the third-party content filtering application 112 may access datasets stored in the memory 110, such as datasets including indications of applications installed by various mobile computing devices such as the mobile computing device 104, indications of candidate mobile applications, and/or indications of third-party content associated with respective candidate mobile applications. Additionally or alternatively, the third-party content filtering application 112 may access external databases including one or more of these datasets or portions thereof, such as a database 114 storing indications of applications installed by various mobile computing devices such as the mobile computing device 104, a candidate mobile application database 115 storing data related to candidate mobile applications, and/or a third-party content database 116 storing data related to third-party content associated with respective candidate mobile applications.

The third-party content filtering application 112 may determine or otherwise identify a set of candidate mobile applications that are associated with third-party content that is presentable via the mobile computing device 104. For example, the third-party content filtering application 112 may access datasets or databases (115, 116) storing data related to candidate mobile applications and/or data related to third-party content associated with respective candidate mobile applications. For instance, in some examples, the third-party content may include advertisement content or informational content related to one or more of the candidate mobile applications. In some examples, the third-party content filtering application 112 may identify particular candidate mobile applications for a particular mobile computing device 104, or for a particular user of the mobile computing device 104, and/or particular third-party content associated with the candidate mobile applications for a particular user of the mobile computing device 104, *e.g.,* based on additional data such as location data, demographic data, or other user data associated with the user of the mobile computing device 104 that is provided to the server device 102 based on the user of the mobile computing device 104 granting permission.

In some examples, the third-party content filtering application 112 may send these determined or identified items of third-party content, as well as an indication of candidate mobile applications associated with each item of third-party content, to the mobile computing device 104. For instance, in some examples, the third-party content filtering application 112 may subsequently receive a request from the mobile computing device 104 for additional items of third-party content associated with different (not necessarily specified) candidate mobile applications, and may send the additional items of third-party content, as well as an indication of candidate mobile applications associated with each item of third-party content, to the mobile computing device 104.

Furthermore, in some examples, the third-party content filtering application 112 may send a listing of candidate mobile applications to the mobile computing device 104, and may subsequently receive, in response from the mobile computing device 104, an indication of one or more of the candidate mobile applications that are not currently installed on the memory of the mobile computing device 104. The third-party content filtering application 112 may then send the determined or identified items of third-party content that are associated with the candidate applications that have not already been installed by the mobile computing device 104 to the mobile computing device 104.

Moreover, in some examples, the third-party content filtering application 112 may determine or receive an indication of which applications are installed by the mobile computing device 104 (that is provided to the server device 102 based on the user of the mobile computing device 104 granting permission), and may send the determined or identified items of third-party content that are associated with applications that are not already installed by the mobile computing device 104 to the mobile computing device 104. In some examples, the third-party content filtering application 112 may access a dataset or database 114 storing indications of applications downloaded and/or installed by various mobile computing devices such as the mobile computing device 104 in order to determine which applications are not already installed by the mobile computing device 104. For instance, in some examples, the database 114 may be populated by an application store or other application provider based on an application download history associated with the mobile computing device 104 (that is provided to the server device 102 based on the user of the mobile computing device 104 granting permission).

Furthermore, in some examples, the third-party content filtering application 112 may send a query or request to the mobile computing device 104 regarding which applications are currently installed on the memory of the mobile computing device 104, and the third-party content filtering application may subsequently receive (from the mobile computing device 104) an indication of one or more applications that are currently installed on the memory of the mobile computing device 104 (that is provided to the server device 102 based on the user of the mobile computing device 104 granting permission). Moreover, in some examples, the third-party content filtering application 112 may periodically receive updates of one or more applications that have been newly installed on the memory of the mobile computing device 104 (and/or one or more applications that have been newly uninstalled from the memory of the mobile computing device 104), in some cases regardless of whether the third-party content filtering application 112 sends a request for such updates to the mobile computing device 104.

For instance, in some examples, the third-party content filtering application 112 may compare the set of candidate mobile applications to the applications to the applications that the third-party content filtering application 112 has determined are installed by the mobile computing device 104, and may identify candidate applications that have not already been installed by the mobile computing device 104 (*i.e.,* candidate applications that the third-party content filtering application 112 has not determined to have been installed by the mobile computing device 104). Furthermore, the third-party content filtering application 112 may send third-party content that is associated with the candidate applications that have not already been installed by the mobile computing device 104 to the mobile computing device 104. That is, in this example, the third-party content filtering application 112 may refrain from sending third-party content that is associated with the candidate applications that have already been installed by the mobile computing device 104 (*i.e.,* based on the most recent updates received by the third-party content filtering application 112) to the mobile computing device 104.

Additionally, in some examples, the third-party content filtering application 112 (or another application of the server device 102) may receive, from the mobile computing device 104, indications of applications that are installed by the mobile computing device 104 after the mobile computing device 104 presents third-party content associated with various applications (provided to the server device 102 based on the user of the mobile computing device 104 granting permission). For instance, the server device 102 may receive an indication (from the mobile computing device 104) of whether an application associated with an item of third-party content was installed within a threshold period of time (*e.g.,* 15 minutes, an hour, a day, a week, etc.) after the item of third-party content was presented by the mobile computing device 104, or may determine such an indication based on reports received from the mobile computing device 104.

The mobile computing device 104 may include a user interface 118, one or more processors 120, and a memory 122 (*e.g.,* volatile memory, non-volatile memory). The memory 122 may be accessible by the one or more processors 120 (*e.g.,* via a memory controller). The one or more processors 120 may interact with the memory 122 to obtain, for example, computer-readable instructions stored in the memory 122. The computer-readable instructions stored in the memory 122 may cause the one or more processors 120 to execute one or more applications, including one or more various installed applications 124A, 124B, . . . 124N, a third-party content filtering application 126, and/or a content presentation application 128. Furthermore, in some examples, the computer-readable instructions stored on the memory 122 may include instructions for carrying out any of the steps of the method 300, described in greater detail below with respect to FIG. 3.

Executing the third-party content filtering application 126 may include identifying or otherwise determining which applications 124A, 124B, . . . 124N are currently installed on the mobile computing device 104. For simplicity, while the applications 124A, 124B, . . . 124N that are currently installed on the mobile computing device 104 may include the third-party content filtering application 126, and/or the content presentation application 128, along with a number of other mobile computing device applications, all of these applications may be collectively referred to as "the installed applications 124." In some examples, the third-party content filtering application 126 may periodically identify or determine which installed applications 124 are currently present on the memory 122, and may generate a report indicating the installed applications 124 that are currently present on the memory 122. For instance, the report may include an indication of any of the installed applications 124 that have been added or removed since the previous report. In some examples, the third-party content filtering application 126 may send this report to the server device 102 (based on the user of the mobile computing device 104 granting permission), in some cases in response to requests that the third-party content filtering application 126 may receive from the server device 102.

Moreover, in some examples, the third-party content filtering application 126 may receive a listing of candidate mobile applications from the server device 102. The third-party content filtering application 126 may compare the listing of candidate mobile applications received from the server device 102 to the installed applications 124 in order to identify one or more candidate mobile applications that are not already installed on the mobile computing device 104. The third-party content filtering application 126 may subsequently send the server device 102 an indication of one or more of the candidate mobile applications that are not currently installed on the memory of the mobile computing device 104 (based on the user of the mobile computing device 104 granting permission).

In some examples, after sending this information to the server device 102, the third-party content filtering application 126 may subsequently receive items of third-party content from the server device 102 and may provide these items of third-party content to the content presentation application 128 for presentation via the user interface 118.

Additionally, in some examples, the third-party content filtering application 126 may receive items of third-party content, as well as indications of candidate mobile applications associated with each item of third-party content, from the server device 102. The third-party content filtering application 126 may compare the candidate mobile applications associated with each item of third-party content to the installed applications 124 in order to determine whether any of the candidate mobile applications are already installed on the memory of the mobile computing device 104. Upon identifying one or more items of third-party content that are associated with applications that are not already installed on the mobile computing device 104, the third-party content filtering application 126 may provide these identified items of third-party content to the content presentation application 128 for presentation via the user interface 118.

Furthermore, if all of the candidate mobile applications associated with the items of third-party content that the mobile computing device 104 receives from the server device 102 are already installed on the mobile computing device 104, the third-party content filtering application 126 may send a request to the server device 102 for additional items of third-party content, associated with different (not necessarily specified) candidate mobile applications. The third-party content filtering application 126 may then receive additional items of third-party content, associated with different candidate mobile applications, from the server device 102, and may repeat this process until the third-party content filtering application 126 identifies one or more items of third-party content that are associated with applications that are not already installed on the mobile computing device 104. The third-party content filtering application 126 may provide these identified items of third-party content that are not already installed on the mobile computing device 104 to the content presentation application 128 for presentation via the user interface 118.

For instance, executing the content presentation application 128 may include presenting content including media content, web content, game content, etc., as well as third-party content from the third-party content filtering application 126, via the user interface 118. In some examples, the content provided by the content presentation application 128 via the user interface 118 may include audio content, video content, haptic content, etc.

Additionally, in some examples, the third-party content filtering application 126 (or another application of the mobile computing device 104) may send indications of applications that are installed by the mobile computing device 104 after the mobile computing device 104 presents third-party content associated with various applications (based on the user of the mobile computing device 104 granting permission). For instance, the mobile computing device 104 may send an indication of whether an application associated with an item of third-party content was installed on the memory 122 of the mobile computing device 104 within a threshold period of time (*e.g.,* 15 minutes, an hour, a day, a week, etc.) after the item of third-party content was presented by the mobile computing device 104.

### Example method in a server device

FIG. 2 is a flow diagram of an example method 200 for filtering third-party content related to the installation of mobile applications that is to be provided via a given mobile computing device based on which applications are already installed on that mobile computing device, implemented via a server device, as may be used in the system 100 of FIG. 1, in accordance with some examples provided herein. One or more steps of the method 200 may be implemented as a set of instructions stored on a computer-readable memory (*e.g.,* memory 110 of the server device 102) and executable on one or more processors (*e.g.,* processor 108 of the server device 102).

At block 204, the method 200 may include determining, by a server device (*e.g.,* the server device 102), a set of one or more candidate mobile applications, each associated with respective third-party content presentable on a mobile computing device (*e.g.,* the mobile computing device 104).

At block 206, a determination may be made as to whether one or more of the set of candidate mobile applications are included in the set of one or more mobile computing device applications installed on the mobile computing device.

For instance, in some examples, the method 200 may include receiving an indication of one or more mobile applications installed on the mobile computing device, from the mobile computing device, and the determination at block 206 may be based on the indication of one or more applications installed on the mobile computing device as received from the mobile computing device itself. For example, the mobile computing device may periodically (in response to requests from the server device or otherwise) send updated indications of mobile applications installed on the mobile computing device. Additionally, in some examples, the method 200 may include determining an indication of one or more mobile applications installed on the mobile computing device based on data provided by a mobile application store or provider accessed by the mobile computing device. For instance, the data provided by the mobile application store or provider may include an indication of which mobile applications were purchased by and/or downloaded by the mobile computing device, and the determination made at block 206 may be based on the indication of one or more applications installed on the mobile computing device as determined based on the data provided by the mobile application store or provider.

Additionally, in some examples, the method 200 may include the server device sending an indication of the set of candidate mobile applications to the mobile computing device. The mobile computing device may respond to the indication of candidate mobile applications sent by the server device by sending an indication of one or more of the candidate mobile applications that are installed on the mobile computing device, and/or sending an indication of one or more of the candidate mobile applications that are not installed on the mobile computing device, *i.e.,* such that the method 200 includes the server device receiving an indication of one or more of the candidate mobile applications that are installed on the mobile computing device, and/or sending an indication of one or more of the candidate mobile applications that are not installed on the mobile computing device.

If one or more of the set of candidate mobile applications are included in the set of one or more mobile computing device applications installed on the mobile computing device (block 206, YES) the method 200 may include refraining (block 208) from sending third-party content associated with those mobile applications to the mobile computing device.

If one or more of the set of candidate mobile applications are not included in the set of one or more mobile computing device applications installed on the mobile computing device (block 206, NO) the method 200 may include sending (block 210) third-party content associated with one or more of those mobile applications to the mobile computing device.

Additionally, in some examples, the method 200 may further include receiving or otherwise determining an updated indication of one or more mobile applications installed on the mobile computing device. For instance, the updated indication of the one or more applications installed on the mobile computing device may indicate that one of the applications previously determined to be absent from the mobile computing device were actually present on the mobile computing device prior to third-party content associated with that application being sent to the mobile computing device (*e.g.,* because the previous indication/determination of the one or more applications installed on the mobile computing device was out of date). In such cases, the method 200 may include the server device sending third-party content associated with another mobile application that is not present on the mobile computing device according to the updated indication of the one or more applications installed on the mobile computing device.

Furthermore, in some examples, the updated indication of the one or more applications installed on the mobile computing device may indicate that one or more of the mobile applications previously determined to be present on the mobile computing device are now absent from the mobile computing device (*e.g.,* because the these applications were uninstalled from the mobile computing device since the previous indication/determination of the one or more applications installed on the mobile computing device). In such cases, the method 200 may include the server device sending third-party content associated with one of the mobile applications that are newly determined to be absent from the mobile computing device.

Additionally, in some examples, the updated indication of the one or more applications installed on the mobile computing device may indicate that one or more mobile applications for which associated third-party content was sent to the mobile computing device have subsequently been installed on the mobile computing device. In particular, the updated indication of the one or more applications installed on the mobile computing device may include an indication that the one or more mobile applications for which associated third-party content was sent to the mobile computing device have subsequently been installed on the mobile computing device, *e.g.,* within a threshold amount of time *(e.g.,* 15 minutes, one hour, one day, one week) after the third-party content was presented via the mobile computing device.

### Example method in a mobile computing device

FIG. 3 is a flow diagram of an example method 300 for filtering third-party content related to the installation of mobile applications that is to be provided via a given mobile computing device based on which applications are already installed on that mobile computing device, implemented via a mobile computing device, as may be used in the system 100 of FIG. 1, in accordance with some examples provided herein. One or more steps of the method 300 may be implemented as a set of instructions stored on a computer-readable memory (*e.g.,* memory 122 of the mobile computing device 104) and executable on one or more processors (*e.g.,* processor 120 of the mobile computing device 104).

At block 302, the method 300 may include determining, by a mobile computing device (*e.g.,* the mobile computing device 104), an indication of a set of one or more mobile applications installed on the mobile computing device.

At block 304, the method 300 may include receiving, by the mobile computing device, an indication of a set of one or more candidate mobile applications, each associated with respective third-party content presentable on the mobile computing device, *e.g.,* from a server device such as the server device 102. In some examples, the mobile computing device may also receive third-party content associated with one or more of the candidate mobile applications, *e.g.,* from the server device.

At block 306, a determination may be made as to whether one or more of the set of candidate mobile applications are included in the set of one or more mobile computing device applications installed on the mobile computing device.

If one or more of the set of candidate mobile applications are included in the set of one or more mobile computing device applications installed on the mobile computing device (block 306, YES) the method 300 may include refraining (block 308) from presenting third-party content associated with those mobile applications. If one or more of the candidate mobile applications are subsequently uninstalled from the mobile computing device, or otherwise removed from the mobile computing device, the method 300 may further include subsequently presenting third-party content associated with those candidate mobile applications. For instance, in some examples, the method 300 may include the mobile computing device requesting third-party content associated with those candidate mobile applications, *e.g.,* from the server device, and subsequently receiving and presenting the third-party content associated with those candidate mobile applications.

If one or more of the set of candidate mobile applications are not included in the set of one or more mobile computing device applications installed on the mobile computing device (block 306, NO) the method 300 may include presenting (block 310) third-party content associated with one or more of those mobile applications, *e.g.,* via a user interface (such as the user interface 118) associated with the mobile computing device. For instance, in some examples, the method 300 may include the mobile computing device requesting third-party content associated with one or more candidate mobile applications that are not installed on the mobile computing device from the server device. The mobile computing device may subsequently receive and present the third-party content associated with the one or more candidate mobile applications that are not installed on the mobile computing device.

In some examples, the method 300 may include sending an update to the server device indicating that one or more mobile applications for which associated third-party content was presented by the mobile computing device have subsequently been installed on the mobile computing device. In particular, the update may include an indication that the one or more mobile applications for which associated third-party content was sent to the mobile computing device have subsequently been installed on the mobile computing device, *e.g.,* within a threshold amount of time (*e.g.,* 15 minutes, one hour, one day, one week) after the mobile computing device presented the third-party content.

### Additional Considerations

The following additional considerations apply to the foregoing discussion. Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter of the present disclosure.

Additionally, certain embodiments are described herein as including logic or a number of components, modules, or mechanisms. Modules may constitute either software modules (*e.g.,* code stored on a machine-readable medium) or hardware modules. A hardware module is tangible unit capable of performing certain operations and may be configured or arranged in a certain manner. In example embodiments, one or more computer systems (*e.g.,* a standalone, client or server computer system) or one or more hardware modules of a computer system (*e.g.,* a processor or a group of processors) may be configured by software (*e.g.,* an application or application portion) as a hardware module that operates to perform certain operations as described herein.

A hardware module may comprise dedicated circuitry or logic that is permanently configured (*e.g.,* as a special-purpose processor, such as a field programmable gate array (FPGA) or an application-specific integrated circuit (ASIC)) to perform certain operations. A hardware module may also comprise programmable logic or circuitry (*e.g.,* as encompassed within a general-purpose processor or other programmable processor) that is temporarily configured by software to perform certain operations. It will be appreciated that the decision to implement a hardware module in dedicated and permanently configured circuitry or in temporarily configured circuitry (*e.g.,* configured by software) may be driven by cost and time considerations.

Accordingly, the term hardware should be understood to encompass a tangible entity, be that an entity that is physically constructed, permanently configured (*e.g.,* hardwired), or temporarily configured (*e.g.,* programmed) to operate in a certain manner or to perform certain operations described herein. Considering embodiments in which hardware modules are temporarily configured (*e.g.,* programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware and software modules can provide information to, and receive information from, other hardware and/or software modules. Accordingly, the described hardware modules may be regarded as being communicatively coupled. Where multiple of such hardware or software modules exist contemporaneously, communications may be achieved through signal transmission (*e.g.,* over appropriate circuits and buses) that connect the hardware or software modules. In embodiments in which multiple hardware modules or software are configured or instantiated at different times, communications between such hardware or software modules may be achieved, for example, through the storage and retrieval of information in memory structures to which the multiple hardware or software modules have access. For example, one hardware or software module may perform an operation and store the output of that operation in a memory device to which it is communicatively coupled. A further hardware or software module may then, at a later time, access the memory device to retrieve and process the stored output. Hardware and software modules may also initiate communications with input or output devices, and can operate on a resource (*e.g.,* a collection of information).

The various operations of example methods described herein may be performed, at least partially, by one or more processors that are temporarily configured (*e.g.,* by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or processors or processor-implemented hardware modules. The performance of certain of the operations may be distributed among the one or more processors, not only residing within a single machine, but deployed across a number of machines. In some example embodiments, the processor or processors may be located in a single location (*e.g.,* within a home environment, an office environment or as a server farm), while in other embodiments the processors may be distributed across a number of locations.

The one or more processors may also operate to support performance of the relevant operations in a "cloud computing" environment or as an SaaS. For example, as indicated above, at least some of the operations may be performed by a group of computers (as examples of machines including processors), these operations being accessible via a network (*e.g.,* the Internet) and via one or more appropriate interfaces (*e.g.,* APIs).

The performance of certain of the operations may be distributed among the one or more processors, not only residing within a single machine, but deployed across a number of machines. In some example embodiments, the one or more processors or processor-implemented modules may be located in a single geographic location (*e.g.,* within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (*e.g.,* a computer memory). These algorithms or symbolic representations are examples of techniques used by those of ordinary skill in the data processing arts to convey the substance of their work to others skilled in the art. As used herein, an "algorithm" or a "routine" is a self-consistent sequence of operations or similar processing leading to a desired result. In this context, algorithms, routines and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (*e.g.,* a computer) that manipulates or transforms data represented as physical (*e.g.,* electronic, magnetic, or optical) quantities within one or more memories (*e.g.,* volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the description. This description should be read to include one or at least one and the singular also includes the plural unless it is obvious that it is meant otherwise.

Upon reading this disclosure, those of skill in the art will appreciate still additional alternative structural and functional designs through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the scope defined in the appended claims.

## Claims

1. A computer-implemented method (200), comprising:
determining (204), by a server, a set of one or more candidate mobile applications, including a first mobile application and a second mobile application, each associated with respective third-party content presentable on a mobile computing device;
sending, by the server, an indication of the set of one or more candidate mobile applications to the mobile computing device;
receiving, by the server and from the mobile computing device, an indication of one or more of: (i) the first mobile application being absent from a set of one or more mobile applications installed on the mobile computing device or (ii) the second mobile application being included in the set of one or more mobile applications installed on the mobile computing device;
in response to determining (206) that the first mobile application is absent from the set of one or more mobile applications installed on the mobile computing device:
sending (210), by the server to the mobile computing device, third-party content associated with the first mobile application, the third party content containing a link for installing the first mobile application; and
in response to determining (206) that the second mobile application is included in the set of one or more mobile applications installed on the mobile computing device:
refraining (208) from sending third-party content associated with the second mobile application to the mobile computing device.

2. The method of claim 1, wherein the set of one or more candidate mobile applications further includes a third mobile application, and further comprising:
receiving, by the server from the mobile computing device, an updated indication of one or more mobile applications installed on the mobile computing device, indicating that the first mobile application was installed on the mobile computing device prior to the mobile computing device receiving the third-party content associated with the first mobile application; and
sending, by the server to the mobile computing device, in response to determining that the third mobile application is absent from the set of one or more mobile applications installed on the mobile computing device, third-party content associated with the third mobile application.

3. The method of claim 1 or claim 2, further comprising:
receiving, by the server from the mobile computing device, an updated indication of one or more mobile applications installed on the mobile computing device, indicating that the first mobile application was installed on the mobile computing device within a threshold period of time, subsequent to the mobile computing device presenting the third-party content associated with the first mobile application.

4. The method of any preceding claim, further comprising:
receiving, by the server from the mobile computing device, an updated indication of one or more mobile applications installed on the mobile computing device, indicating that the second mobile application was uninstalled from the mobile computing device; and
sending, by the server to the mobile computing device, in response to determining that the second mobile application is absent from the set of one or more mobile applications installed on the mobile computing device, third-party content associated with the second mobile application.

5. A computer-implemented method (300), comprising:
determining (302), by a mobile computing device, an indication of a set of one or more mobile applications installed on the mobile computing device, without providing the indication of the set of one or more mobile applications installed on the mobile computing device to a server;
receiving (304), by the mobile computing device and from the server, an indication of a set of one or more candidate mobile applications, including a first mobile application and a second mobile application, each associated with respective third-party content presentable on the mobile computing device;
in response to determining (306) that the first mobile application is absent from the set of the one or more mobile applications installed on the mobile computing device:
requesting, by the mobile computing device, the third-party content associated with the first mobile application from the server;
receiving, by the mobile computing device, from the server, the third-party content associated with the first mobile application; and
presenting (310), by the mobile computing device, the third-party content associated with the first mobile application, the third-party content containing a link for installing the first mobile application; and
in response to determining (306) that the second mobile application is included in the set of one or more mobile applications installed on the mobile computing device:
refraining from presenting (308), by the mobile computing device, third-party content associated with the second mobile application.

6. The method of claim 5, further comprising:
receiving, by the mobile computing device, from the server, the third-party content associated with the first mobile application, and the third-party content associated with the second mobile application.

7. The method of claim 5 or claim 6, further comprising:
sending, by the mobile computing device, to the server, an updated indication of one or more mobile applications installed on the mobile computing device, indicating that the first mobile application was installed on the mobile computing device within a threshold period of time, subsequent to the mobile computing device presenting the third-party content associated with the first mobile application.

8. The method of any of claims 5 to 7, further comprising:
determining, by the mobile computing device, that the second mobile application was uninstalled from the mobile computing device; and
in response to determining that the second mobile application is absent from the set of the one or more mobile applications installed on the mobile computing device:
presenting, by the mobile computing device, third-party content associated with the second mobile application.

9. The method of claim 8, further comprising:
in response to determining that the second mobile application is absent from the set of the one or more mobile applications installed on the mobile computing device,
requesting, by the mobile computing device, the third-party content associated with the second mobile application from the server; and
receiving, by the mobile computing device, from the server, the third-party content associated with the second mobile application.

10. A system, comprising:
one or more processors; and
a memory, storing computer-readable instructions that, when executed by the one or more processors, cause the one or more processors to perform the method according to any preceding claim.

11. A computer-readable medium storing instructions that, when executed by one or more processors, cause the one or more processors to perform the method according to any of claims 1 to 9.

## Patentansprüche

1. Computerimplementiertes Verfahren (200), umfassend:
Bestimmen (204), durch einen Server, eines Satzes von einer oder mehreren mobilen Kandidatenanwendungen, der eine erste mobile Anwendung und eine zweite mobile Anwendung einschließt, die jeweils mit entsprechendem Drittanbieter-Inhalt verknüpft sind, der auf einer mobilen Rechenvorrichtung darstellbar ist;
Senden, durch den Server, einer Angabe des Satzes von einer oder mehreren mobilen Kandidatenanwendungen an die mobile Rechenvorrichtung;
Empfangen, durch den Server und von der mobilen Rechenvorrichtung, einer Angabe von einer oder mehreren von: (i) dass die erste mobile Anwendung in einem Satz von einer oder mehreren mobilen Anwendungen, die auf der mobilen Rechenvorrichtung installiert sind, fehlt, oder (ii) dass die zweite mobile Anwendung in dem Satz von einer oder mehreren mobilen Anwendungen, die auf der mobilen Rechenvorrichtung installiert sind, eingeschlossen ist;
als Reaktion auf das Bestimmen (206), dass die erste mobile Anwendung in dem Satz von einer oder mehreren mobilen Anwendungen, die auf der mobilen Rechenvorrichtung installiert sind, fehlt:
Senden (210), durch den Server an die mobile Rechenvorrichtung, von Drittanbieter-Inhalt, der mit der ersten mobilen Anwendung verknüpft ist, wobei der Drittanbieter-Inhalt einen Link zum Installieren der ersten mobilen Anwendung enthält; und
als Reaktion auf das Bestimmen (206), dass die zweite mobile Anwendung in dem Satz von einer oder mehreren mobilen Anwendungen, die auf der mobilen Rechenvorrichtung installiert sind, eingeschlossen ist:
Unterlassen (208) des Sendens von Drittanbieter-Inhalt, der mit der zweiten mobilen Anwendung verknüpft ist, an die mobile Rechenvorrichtung.

2. Verfahren nach Anspruch 1, wobei der Satz von einer oder mehreren mobilen Kandidatenanwendungen ferner eine dritte mobile Anwendung einschließt, und ferner umfassend:
Empfangen, durch den Server von der mobilen Rechenvorrichtung, einer aktualisierten Angabe von einer oder mehreren mobilen Anwendungen, die auf der mobilen Rechenvorrichtung installiert sind, die angibt, dass die erste mobile Anwendung auf der mobilen Rechenvorrichtung installiert wurde, bevor die mobile Rechenvorrichtung den Drittanbieter-Inhalt empfangen hat, der mit der ersten mobilen Anwendung verknüpft ist; und
Senden, durch den Server an die mobile Rechenvorrichtung, als Reaktion auf das Bestimmen, dass die dritte mobile Anwendung in dem Satz von einer oder mehreren mobilen Anwendungen, die auf der mobilen Rechenvorrichtung installiert sind, fehlt, von Drittanbieter-Inhalt, der mit der dritten mobilen Anwendung verknüpft ist.

3. Verfahren nach Anspruch 1 oder Anspruch 2, ferner umfassend: Empfangen, durch den Server von der mobilen Rechenvorrichtung, einer aktualisierten Angabe von einer oder mehreren mobilen Anwendungen, die auf der mobilen Rechenvorrichtung installiert sind, die angibt, dass die erste mobile Anwendung auf der mobilen Rechenvorrichtung innerhalb einer Schwellenzeitspanne im Anschluss daran installiert wurde, dass die mobile Rechenvorrichtung den Drittanbieter-Inhalt dargestellt hat, der mit der ersten mobilen Anwendung verknüpft ist.

4. Verfahren nach einem der vorhergehenden Ansprüche, ferner umfassend:
Empfangen, durch den Server von der mobilen Rechenvorrichtung, einer aktualisierten Angabe von einer oder mehreren mobilen Anwendungen, die auf der mobilen Rechenvorrichtung installiert sind, die angibt, dass die zweite mobile Anwendung von der mobilen Rechenvorrichtung deinstalliert wurde; und
Senden, durch den Server an die mobile Rechenvorrichtung, als Reaktion auf das Bestimmen, dass die zweite mobile Anwendung in dem Satz von einer oder mehreren mobilen Anwendungen, die auf der mobilen Rechenvorrichtung installiert sind, fehlt, von Drittanbieter-Inhalt, der mit der zweiten mobilen Anwendung verknüpft ist.

5. Computerimplementiertes Verfahren (300), umfassend:
Bestimmen (302), durch eine mobile Rechenvorrichtung, einer Angabe eines Satzes von einer oder mehreren mobilen Anwendungen, die auf der mobilen Rechenvorrichtung installiert sind, ohne die Angabe des Satzes von einer oder mehreren mobilen Anwendungen, die auf der mobilen Rechenvorrichtung installiert sind, an einen Server bereitzustellen;
Empfangen (304), durch die mobile Rechenvorrichtung und von dem Server, einer Angabe eines Satzes von einer oder mehreren mobilen Kandidatenanwendungen, der eine erste mobile Anwendung und eine zweite mobile Anwendung einschließt, die jeweils mit entsprechendem Drittanbieter-Inhalt verknüpft sind, der auf der mobilen Rechenvorrichtung darstellbar ist;
als Reaktion auf das Bestimmen (306), dass die erste mobile Anwendung in dem Satz der einen oder mehreren mobilen Anwendungen, die auf der mobilen Rechenvorrichtung installiert sind, fehlt:
Anfordern, durch die mobile Rechenvorrichtung, des Drittanbieter-Inhalts, der mit der ersten mobilen Anwendung verknüpft ist, von dem Server;
Empfangen, durch die mobile Rechenvorrichtung, von dem Server, des Drittanbieter-Inhalts, der mit der ersten mobilen Anwendung verknüpft ist; und
Darstellen (310), durch die mobile Rechenvorrichtung, des Drittanbieter-Inhalts, der mit der ersten mobilen Anwendung verknüpft ist, wobei der Drittanbieter-Inhalt einen Link zum Installieren der ersten mobilen Anwendung enthält; und
als Reaktion auf das Bestimmen (306), dass die zweite mobile Anwendung in dem Satz von einer oder mehreren mobilen Anwendungen, die auf der mobilen Rechenvorrichtung installiert sind, eingeschlossen ist:
Unterlassen des Darstellens (308), durch die mobile Rechenvorrichtung, von Drittanbieter-Inhalt, der mit der zweiten mobilen Anwendung verknüpft ist.

6. Verfahren nach Anspruch 5, ferner umfassend:
Empfangen, durch die mobile Rechenvorrichtung, von dem Server, des Drittanbieter-Inhalts, der mit der ersten mobilen Anwendung verknüpft ist, und des Drittanbieter-Inhalts, der mit der zweiten mobilen Anwendung verknüpft ist.

7. Verfahren nach Anspruch 5 oder Anspruch 6, ferner umfassend: Senden, durch die mobile Rechenvorrichtung, an den Server, einer aktualisierten Angabe von einer oder mehreren mobilen Anwendungen, die auf der mobilen Rechenvorrichtung installiert sind, die angibt, dass die erste mobile Anwendung auf der mobilen Rechenvorrichtung innerhalb einer Schwellenzeitspanne im Anschluss daran installiert wurde, dass die mobile Rechenvorrichtung den Drittanbieter-Inhalt dargestellt hat, der mit der ersten mobilen Anwendung verknüpft ist.

8. Verfahren nach einem der Ansprüche 5 bis 7, ferner umfassend: Bestimmen, durch die mobile Rechenvorrichtung, dass die zweite mobile Anwendung von der mobilen Rechenvorrichtung deinstalliert wurde; und
als Reaktion auf das Bestimmen, dass die zweite mobile Anwendung in dem Satz der einen oder mehreren mobilen Anwendungen, die auf der mobilen Rechenvorrichtung installiert sind, fehlt:
Darstellen, durch die mobile Rechenvorrichtung, von Drittanbieter-Inhalt, der mit der zweiten mobilen Anwendung verknüpft ist.

9. Verfahren nach Anspruch 8, ferner umfassend:
als Reaktion auf das Bestimmen, dass die zweite mobile Anwendung in dem Satz der einen oder mehreren mobilen Anwendungen, die auf der mobilen Rechenvorrichtung installiert sind, fehlt, Anfordern, durch die mobile Rechenvorrichtung, des Drittanbieter-Inhalts, der mit der zweiten mobilen Anwendung verknüpft ist, von dem Server; und
Empfangen, durch die mobile Rechenvorrichtung, von dem Server, des Drittanbieter-Inhalts, der mit der zweiten mobilen Anwendung verknüpft ist.

10. System, umfassend:
einen oder mehrere Prozessoren; und
einen Speicher, der computerlesbare Anweisungen speichert, die, wenn sie durch den einen oder die mehreren Prozessoren ausgeführt werden, den einen oder die mehreren Prozessoren veranlassen, das Verfahren nach einem der vorhergehenden Ansprüche durchzuführen.

11. Computerlesbares Medium, das Anweisungen speichert, die, wenn sie durch einen oder mehrere Prozessoren ausgeführt werden, den einen oder die mehreren Prozessoren veranlassen, das Verfahren nach einem der Ansprüche 1 bis 9 durchzuführen.

## Revendications

1. Procédé mis en œuvre par ordinateur (200), comprenant :
la détermination (204), par un serveur, d'un ensemble d'une ou de plusieurs applications mobiles candidates, comportant une première application mobile et une deuxième application mobile, chacune associée à un contenu tiers respectif présentable sur un dispositif informatique mobile ;
l'envoi, par le serveur, d'une indication de l'ensemble d'une ou de plusieurs applications mobiles candidates au dispositif informatique mobile ;
la réception, par le serveur et en provenance du dispositif informatique mobile, d'une indication d'un ou de plusieurs parmi : (i) l'absence de la première application mobile d'un ensemble d'une ou de plusieurs applications mobiles installées sur le dispositif informatique mobile ou (ii) l'inclusion de la deuxième application mobile dans l'ensemble d'une ou de plusieurs applications mobiles installées sur le dispositif informatique mobile ;
en réponse à la détermination (206) selon laquelle la première application mobile est absente de l'ensemble d'une ou de plusieurs applications mobiles installées sur le dispositif informatique mobile :
l'envoi (210), par le serveur au dispositif informatique mobile, de contenu tiers associé à la première application mobile, le contenu tiers contenant un lien pour installer la première application mobile ; et
en réponse à la détermination (206) selon laquelle la deuxième application mobile est incluse dans l'ensemble d'une ou de plusieurs applications mobiles installées sur le dispositif informatique mobile :
l'abstention (208) d'envoi de contenu tiers associé à la deuxième application mobile au dispositif informatique mobile.

2. Procédé selon la revendication 1, dans lequel l'ensemble d'une ou de plusieurs applications mobiles candidates comporte également une troisième application mobile, et comprenant également :
la réception, par le serveur en provenance du dispositif informatique mobile, d'une indication mise à jour d'une ou de plusieurs applications mobiles installées sur le dispositif informatique mobile, indiquant que la première application mobile était installée sur le dispositif informatique mobile avant la réception par le dispositif informatique mobile du contenu tiers associé à la première application mobile ; et l'envoi, par le serveur au dispositif informatique mobile, en réponse à la détermination selon laquelle la troisième application mobile est absente de l'ensemble d'une ou de plusieurs applications mobiles installées sur le dispositif informatique mobile, de contenu tiers associé à la troisième application mobile.

3. Procédé selon la revendication 1 ou la revendication 2, comprenant également :
la réception, par le serveur en provenance du dispositif informatique mobile, d'une indication mise à jour d'une ou de plusieurs applications mobiles installées sur le dispositif informatique mobile, indiquant que la première application mobile était installée sur le dispositif informatique mobile pendant un délai seuil, à la suite de la présentation par le dispositif informatique mobile du contenu tiers associé à la première application mobile.

4. Procédé selon une quelconque revendication précédente, comprenant également :
la réception, par le serveur en provenance du dispositif informatique mobile, d'une indication mise à jour d'une ou de plusieurs applications mobiles installées sur le dispositif informatique mobile, indiquant que la deuxième application mobile a été désinstallée du dispositif informatique mobile ; et
l'envoi, par le serveur au dispositif informatique mobile, en réponse à la détermination selon laquelle la deuxième application mobile est absente de l'ensemble d'une ou de plusieurs applications mobiles installées sur le dispositif informatique mobile, de contenu tiers associé à la deuxième application mobile.

5. Procédé mis en œuvre par ordinateur (300), comprenant :
la détermination (302), par un dispositif informatique mobile, d'une indication d'un ensemble d'une ou de plusieurs applications mobiles installées sur le dispositif informatique mobile, sans fournir l'indication de l'ensemble d'une ou de plusieurs applications mobiles installées sur le dispositif informatique mobile à un serveur ;
la réception (304), par le dispositif informatique mobile et en provenance du serveur, d'une indication d'un ensemble d'une ou de plusieurs applications mobiles candidates, comportant une première application mobile et une deuxième application mobile, chacune associée à du contenu tiers respectif présentable sur le dispositif informatique mobile ;
en réponse à la détermination (306) selon laquelle la première application mobile est absente de l'ensemble des une ou plusieurs applications mobiles installées sur le dispositif informatique mobile :
la demande, par le dispositif informatique mobile, du contenu tiers associé à la première application mobile auprès du serveur ;
la réception, par le dispositif informatique mobile, en provenance du serveur, du contenu tiers associé à la première application mobile ; et
la présentation (310), par le dispositif informatique mobile, du contenu tiers associé à la première application mobile, le contenu tiers contenant un lien pour installer la première application mobile ; et
en réponse à la détermination (306) selon laquelle la deuxième application mobile est incluse dans l'ensemble d'une ou de plusieurs applications mobiles installées sur le dispositif informatique mobile :
l'abstention de présentation (308), par le dispositif informatique mobile, de contenu tiers associé à la deuxième application mobile.

6. Procédé selon la revendication 5, comprenant également :
la réception, par le dispositif informatique mobile, en provenance du serveur, du contenu tiers associé à la première application mobile et du contenu tiers associé à la deuxième application mobile.

7. Procédé selon la revendication 5 ou la revendication 6, comprenant également :
l'envoi, par le dispositif informatique mobile, vers le serveur, d'une indication mise à jour d'une ou de plusieurs applications mobiles installées sur le dispositif informatique mobile, indiquant que la première application mobile était installée sur le dispositif informatique mobile pendant un délai seuil, à la suite de la présentation par le dispositif informatique mobile du contenu tiers associé à la première application mobile.

8. Procédé selon l'une quelconque des revendications 5 à 7, comprenant également :
la détermination, par le dispositif informatique mobile, selon laquelle la deuxième application mobile a été désinstallée du dispositif informatique mobile ; et
en réponse à la détermination selon laquelle la deuxième application mobile est absente de l'ensemble des une ou plusieurs applications mobiles installées sur le dispositif informatique mobile :
la présentation, par le dispositif informatique mobile, de contenu tiers associé à la deuxième application mobile.

9. Procédé selon la revendication 8, comprenant également :
en réponse à la détermination selon laquelle la deuxième application mobile est absente de l'ensemble des une ou plusieurs applications mobiles installées sur le dispositif informatique mobile,
la demande, par le dispositif informatique mobile, du contenu tiers associé à la deuxième application mobile auprès du serveur ; et
la réception, par le dispositif informatique mobile, en provenance du serveur, du contenu tiers associé à la deuxième application mobile.

10. Système, comprenant :
un ou plusieurs processeurs ; et
une mémoire, stockant des instructions lisibles par ordinateur qui, lorsqu'elles sont exécutées par les un ou plusieurs processeurs, amènent les un ou plusieurs processeurs à réaliser le procédé selon une quelconque revendication précédente.

11. Support lisible par ordinateur stockant des instructions qui, lorsqu'elles sont exécutées par un ou plusieurs processeurs, amènent les un ou plusieurs processeurs à réaliser le procédé selon l'une quelconque des revendications 1 à 9.
